# EUROPÄISCHE PATENTSCHRIFT

(11) **EP 2 230 410 B1**
(45) Veröffentlichungstag und Bekanntmachung des Hinweises auf die Patenterteilung: **16.03.2016**
(21) Anmeldenummer: 10000448.0
(22) Anmeldetag: 19.01.2010
(51) Int. Cl.: F16B 39/24, F16B 39/26, F16B 43/00

(54) **Befestigungselement**
Fastening element
Elément de fixation

(30) Priorität: 20.03.2009 DE 102009014162
(43) Veröffentlichungstag der Anmeldung: 22.09.2010
(73) Patentinhaber: NEDSCHROEF PLETTENBERG GmbH, 58840 Plettenberg (DE)
(72) Erfinder: Ferreau, Oliver, 44799 Bochum (DE); Hirschfeld, Henning, 58840 Plettenberg (DE); Bechler, Cord, 58511 Lüdenscheid (DE); Peil, Andreas, 58640 Iserlohn (DE)
(74) Vertreter: Patentanwälte Dörner & Kötter PartG mbB

(56) Entgegenhaltungen:
- EP-A2- 1 091 135
- DE-U1- 20 317 178
- GB-A- 420 698
- US-A- 1 350 545
- US-A- 2 225 654

## Beschreibung

Die Erfindung betrifft ein Befestigungselement, nach dem Oberbegriff des Patentanspruchs 3. Die Erfindung betrifft weiterhin eine Unterlegscheibe zur unverlierbaren drehbaren Befestigung an einer Mutter mit angeformtem Ringflansch nach dem Oberbegriff des Patentanspruchs 1.

Befestigungselemente der vorgenannten Art sind aus der DE 94 00 671 U1 bekannt. Der Mutterkörper weist einen Außenflansch auf, der von einem an der Unterlegscheibe angeformten Ringsteg umfasst wird. Die Unterlegscheibe ist damit zwar drehbar, aber unlösbar mit der Mutter verbunden. Weitere Ausführungen solcher Befestigungselemente sind in der EP 1 091 135 A2, der DE 203 17 178 U1, der GB 420 698 A sowie der US 2 225 654 A beschrieben.

Nachteilig an den vorbekannten Befestigungselementen ist, dass die Unterlegscheibe sich beim Anziehen des Mutterkörpers mitdrehen kann. Darüber hinaus ist es wünschenswert, dass die Unterlegscheibe nach dem Anziehen des Mutterkörpers vollflächig auf der Anlagefläche anliegt.

Hier will die Erfindung Abhilfe schaffen. Der Erfindung liegt die Aufgabe zu Grunde, eine Unterlegscheibe zur unverlierbaren, drehbaren Befestigung an einer Mutter zu schaffen, bei der ein Mitdrehen beim Anziehen der Mutter verhindert ist und die darüber hinaus nach dem Anziehen der Mutter vollumfänglich auf der Anlagefläche anliegt. Gemäß der Erfindung wird diese Aufgabe durch die Merkmale des Patentanspruchs 1 gelöst.

Mit der Erfindung ist eine Unterlegscheibe zur unverlierbaren, drehbaren Befestigung an einer Mutter geschaffen, bei der ein Mitdrehen beim Anziehen der Mutter verhindert ist und die darüber hinaus nach dem Anziehen der Mutter vollumfänglich an der Anlagefläche anliegt. Die Unterlegscheibe gerät im Laufe des Schraubvorgangs in Anlage zu einer Gegenfläche am Bauteil, wobei die flächigen Ausstellungen ein Verkrallen in der Gegenfläche bewirken, wodurch ein Mitdrehen der Unterlegscheibe verhindert ist. Weiterhin weisen die Ausstellungen eine Federwirkung auf. Die Austellungen liegen während des Anziehens der Mutter kontinuierlich an der Anlagefläche an und werden in die Ebene der Unterlegscheibe gepresst, so dass eine vollumfängliche Anlage der Unterlegscheibe erzielt ist.

Dabei weisen die flächigen Ausstellungen einen im Wesentlichen rechteckförmigen Umfang auf.

Dadurch, dass die flächige Ausstellung in einem Winkel zur Oberfläche der Unterlegscheibe angeordnet ist, so dass eine keilförmige Ausstellung gebildet ist, ist eine gute Federwirkung bewirkt. Eine gute Verdrehsicherung ist dadurch erzielbar, dass das hervorragende Keilende im Wesentlichen in die Drehrichtung zeigt, in der ein Anziehen der Mutter auf einem Schraubenkörper erzielt wird.

Es ist wenigstens eine Ausstellung angeordnet, welche aus zwei gegeneinander angeordneten keilförmigen Ausstellungen zusammengesetzt ist, so dass im Wesentlichen eine M-förmige Flächenkontur gebildet ist. Eine solche doppelte Ausstellung ermöglicht eine Querverschiebung innerhalb des Mutter-Scheibe-Verbundes. Die Querverschiebung ergibt sich beispielsweise durch die unterschiedlichen Wärmeausdehnungen bei ungleichen Materialien unter Temperatur, oder Verbünden von Materialien mit unterschiedlichen Ausgangstemperaturen. Zu diesem Zweck sollte auch das Spiel der Mutter innerhalb der Scheibe in Querrichtung etwas größer dimensioniert sein. Da Querverschiebungskräfte bei einer einfach ausgestellten Scheibe zu einem Antrieb in eine Richtung, das heißt zu einem Drehen der Scheibe führen könnten, bewirken die beidseitigen Ausstellungen hier einen Ausgleich, das heißt, die Scheibe bleibt auch bei Querverschiebungen stehen.

Dadurch, dass an der Unterlegscheibe ein umlaufender Kragen angeformt ist, welcher entgegen der Ausstellung gerichtet zur Umfassung eines Ringflansches einer Mutter angeformt ist, ist eine unverlierbare und drehbare Befestigung an einer Mutter mit angeformtem Ringflansch ermöglicht. Alternativ können auch umlaufend wenigstens zwei angeformte Haltekrallen angeordnet sein.

Die Erfindung betrifft weiterhin ein Befestigungselement, umfassend eine Mutter, an deren Unterseite ein Flansch angeordnet ist, an dem eine Unterlegscheibe der vorgenannten Art unverlierbar befestigt ist. Bevorzugt ist an der Unterlegscheibe ein umlaufender Kragen angeformt, der nach innen verjüngt ausgebildet ist, wodurch eine axiale Sicherung der Unterlegscheibe an der Mutter bewirkt ist.

Vorteilhaft sind die der Mutter zugewandten Oberfläche der Unterlegscheibe und die der Unterlegscheibe zugewandte Oberfläche der Mutter unterschiedlich beschichtet. Hierdurch ist zwischen Scheibe und Mutter ein gezielter Reibwert einstellbar. Ein Reibfaktor mit möglichst geringer Streuung ist einer der wichtigsten Merkmale bei der Verschraubung, um über das voreingestellte Anziehdrehmoment des automatischen Schraubwerkzeuges sicher die erforderliche Vorspannkraft zu erreichen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: Die dreidimensionale Darstellung einer Mutter mit unverlierbar angeordneter Unterlegscheibe;

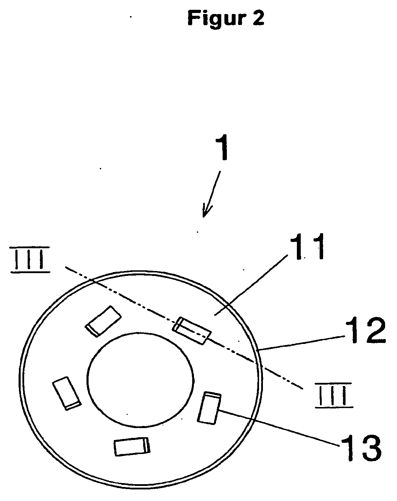

- Fig. 2: die Unterlegscheibe aus Fig. 1 in der Ansicht von oben;
- Fig. 3: die Unterlegscheibe aus Fig. 2 im Schnitt III-III;
- Fig. 4: die dreidimensionale Darstellung einer Mutter mit unverlierbar befestigter Unterlegscheibe in einer erfindungsgemäßen Ausführungsform;

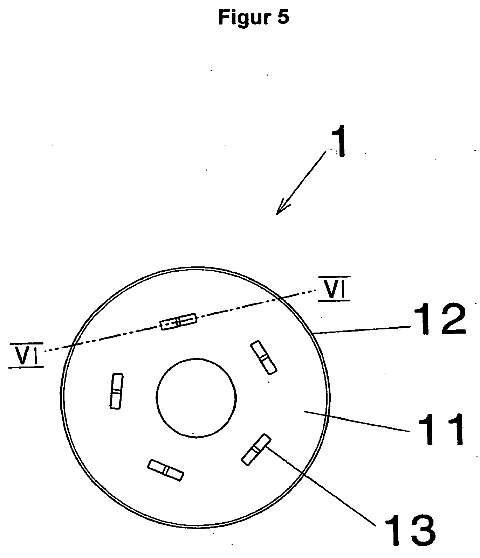

- Fig. 5: die Unterlegscheibe aus Fig. 4 in der Ansicht von oben und
- Fig. 6: die Unterlegscheibe aus Fig. 5 im Schnitt VI-VI.

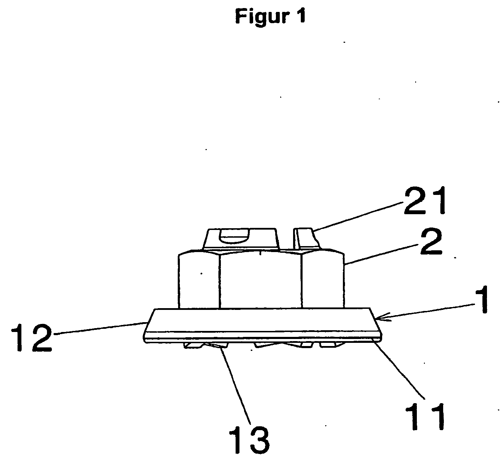

Die Befestigungsvorrichtung nach Fig.1 umfasst eine Mutter 2, an der eine Unterlegscheibe 1 unverlierbar befestigt ist. Die Mutter 2 ist in bekannter Art und Weise als Sechskantmutter mit - nicht dargestelltem - angeformtem Flansch ausgebildet. An ihrer dem Flansch entgegengesetzten Oberseite sind an der Mutter 2 durch in axialer Richtung verlaufende Schlitze beabstandete Klemmzungen 21 angeformt. Die Klemmzungen dienen der Klemmsicherung der Mutter an einer Gewindestange oder dergleichen.

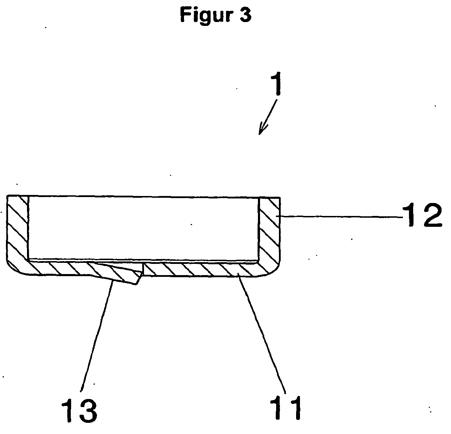

Die Unterlegscheibe 1 besteht im Wesentlichen aus einer ringförmigen Grundplatte 11, an der ein umlaufender Kragen 12 angeformt ist, der den - nicht dargestellten - Flansch der Mutter 2 umschließt. Die Verliersicherung ist dadurch bewirkt, dass der Kragen 12 nach oben sich verjüngend ausgebildet ist. An ihrer der Mutter 2 entgegengesetzten Unterseite sind in die Grundplatte 11 der Unterlegscheibe 2 keilförmige Ausstellungen 13 eingebracht. Wie Figur 3 zu entnehmen, bilden die Ausstellungen 13 federnde Zungen, welche beim Anziehen der Mutter gegen eine Anlagefläche gepresst werden, wodurch diese in ihre Ursprungsebene zurückbewegt werden. Die Fläche zwischen der Unterlegscheibe und der Anlagefläche wird so vollständig genutzt. In Figur 3 ist der umlaufende Kragen 12 zylindrisch ausgebildet. Erst nach Einbringen des Flansches der Mutter 2 wird der Kragen 12 verengt, wodurch die Verliersicherung bewirkt ist.

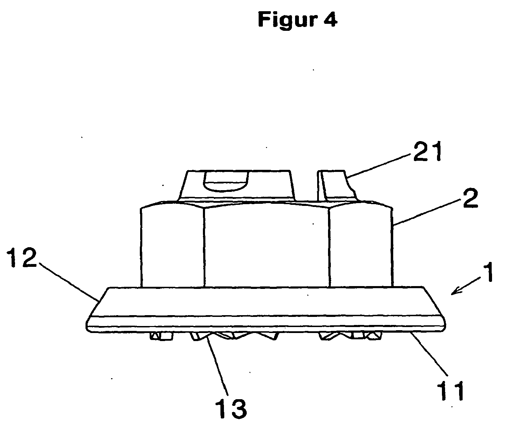

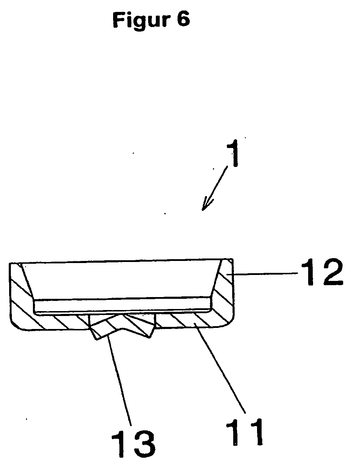

In der erfindungsgemäßen Ausführung gemäß Figur 4 sind die Ausstellungen in Form von zwei gegenläufig angeordneten keilartigen Ausstellungen zusammengesetzt, so dass eine im Wesentlichen M-förmige Flächenkontur bzw. die Form eines in Ausstellrichtung angestellten V gebildet ist. Diese doppelte Ausstellung ermöglicht eine Querverschiebung innerhalb des Muttern-Scheiben-Verbundes, wie sie sich beispielsweise bei ungleichen Materialien unter Temperatur ergibt. Beispielhaft sei hier die Verschraubung eines Abgaskrümmers aus Stahlblech mit Anwendungstemperatur von 500° Celsius an einen wassergekühlten Zylinderkopf aus Aluminium mit ca. 120° Celsius angeführt. Zu diesem Zweck ist auch das Spiel der Mutter innerhalb der Scheibe in Querrichtung etwas größer ausgebildet, als bei der einfach ausgestellten Variante, wie Figur 6 zu entnehmen ist. Hier ist der Kragen 12 innen in Richtung der Mutter sich erweiternd ausgebildet, wodurch das erwünschte größere Spiel der Mutter bewirkt ist.

Beim Anziehen der Mutter 2 werden die zwei gegenläufig nach außen gestellten federnden Zungen der Ausstellung 13 gegen eine Anlagefläche gepresst, wodurch sie in ihre ursprüngliche Ebene (das heißt in die Ebene vor Einbringung der Ausstellung) zurückbewegt werden. Hierdurch wird wiederum die Ausnutzung der vollständigen Fläche zwischen Unterlegscheibe und Anlagefläche erzielt.

## Patentansprüche

1. Unterlegscheibe zur unverlierbaren, drehbaren Befestigung an einer Mutter mit angeformtem Ringflansch, wobei an einer Seite der Unterlegscheibe (1) flächige Ausstellungen (13) ausgeformt sind, die einen im Wesentlichen rechteckförmigen Umfang aufweisen, **dadurch gekennzeichnet, dass** wenigstens eine Ausstellung (13) angeordnet ist, welche durch zwei keilförmig in einem Winkel abgebogene federnde Zungen gebildet ist, die in einem zueinander entgegengesetzten Winkel zur Oberfläche der Unterlegscheibe innerhalb der Fläche der Unterlegscheibe aus dieser heraus ausgestellt sind, wodurch ein Querschnitt der Ausstellung in Form eines in Ausstellrichtung angestellten V gebildet ist, wobei an der Unterlegscheibe (1) ein umlaufender Kragen (12) oder wenigstens zwei Haltekrallen angeformt sind, welche entgegen der Ausstellungen (13) gerichtet zur Umfassung eines Ringflansches einer Mutter (2) angeformt sind.

2. Unterlegscheibe nach Anspruch 1, **dadurch gekennzeichnet, dass** die Ausstellungen (13) derart an der Unterlegscheibe (1) ausgerichtet sind, dass das hervorragende Ende einer der Zungen im Wesentlichen in die Drehrichtung zeigt, in der ein Anziehen der Mutter (2) auf einem Schraubenkörper erzielt wird.

3. Befestigungselement, umfassend eine Mutter, an deren Unterseite ein Flansch angeformt ist, **dadurch gekennzeichnet, dass** an dem Flansch eine Unterlegscheibe (1) nach einem der vorgenannten Ansprüche unverlierbar befestigt ist.

4. Befestigungselement nach Anspruch 3, **dadurch gekennzeichnet, dass** an der Unterlegscheibe (1) ein umlaufender Kragen (12) angeformt ist, der den Flansch der Mutter (2) umschließend nach innen verjüngt ausgebildet ist, wodurch eine axiale Sicherung der Unterlegscheibe (1) an der Mutter (2) bewirkt ist.

## Claims

1. Washer for undetachable, rotatable fastening to a nut with a moulded-on annular flange, wherein on one side of the washer (1) flat projections (13) are formed having a substantially rectangular circumference, **characterised in that** at least one projection (13) is arranged, which is formed by two resilient tongues bent at an angle in a wedge-shaped manner, which project from the washer at an angle opposite to each other to the surface of the washer within the area of the washer, whereby a cross-section of the projection in the shape of a V inclined in the projection direction is formed, wherein a circumferential collar (12) or at least two retaining claws are moulded to the washer (1), which are moulded on opposite to the projections (13) for enclosing an annular flange of a nut (2).

2. Washer according to claim 1, **characterised in that** the projections (13) are aligned to the washer (1) in a way that the protruding end of one of the tongues substantially points to the rotation direction, in which a tightening of the nut (2) on a screw body is achieved.

3. Fastening element comprising a nut, to whose underside a flange is formed, **characterised in that** a washer (1) according to one of the previous claims is undetachably fastened to the flange.

4. Fastening element according to claim 3, **characterised in that** a circumferential collar (12) is moulded to the washer (1), which encloses the flange of the nut (2) and is tapered inwardly, whereby an axial securing of the washer (1) to the nut (2) is effected.

## Revendications

1. Rondelle à fixer, de manière imperdable et rotative, contre un écrou à bride annulaire moulée contre ce dernier, sachant que contre un côté de la rondelle ont été formées (1) des surfaces saillantes (13) qui présentent une périphérie essentiellement rectangulaire, **caractérisée en ce qu'**est disposée au moins une surface saillante (13) formée par deux languettes cunéiformes amorties coudées selon un angle, languettes qui à l'intérieur de la surface de la rondelle font saillie hors de la rondelle selon un angle réciproquement opposé par rapport à la surface de la rondelle, avec pour effet qu'est formée une section de la saillie en forme de V inclinée dans le sens de la saillie, sachant que contre la rondelle (1) a été formé un col (12) périphérique ou qu'ont été formés au moins deux griffes de retenue orientées en direction opposée des saillies (13), afin de ceinturer la bride annulaire d'un écrou (2).

2. Rondelle intercalaire selon la revendication 1, **caractérisée en ce que** les saillies (13) sont orientées de telle sorte contre la rondelle (1) que l'extrémité faisant saillie de l'une des languettes pointe essentiellement vers un sens de rotation permettant 'obtenir le serrage de l'écrou (2) sur un corps de vis.

3. Élément de fixation comprenant un écrou contre la face inférieure duquel est formée une bride, **caractérisé en ce que** contre la bride est fixée, de manière imperdable, une rondelle (1) selon l'une des revendications précédentes.

4. Élément de fixation selon la revendication 3, **caractérisé en ce que** contre la rondelle (1) est formé un collet (12) périphérique configuré s'amincissant vers l'intérieur tout en entourant l'écrou (2), ce qui provoque une sécurisation axiale de la rondelle (1) contre l'écrou (2).
